# EUROPEAN PATENT SPECIFICATION

(11) **EP 1 451 010 B1**
(45) Date of publication and mention of the grant of the patent: **16.08.2006**
(21) Application number: 02789894.9
(22) Date of filing: 26.11.2002
(51) Int. Cl.: B32B 27/08, B60J 10/00

(54) **FLANGE SECTION SEAL MATERIAL**
DICHTUNGSMATERIAL FÜR FLANSCHPROFIL
MATERIAU D'ETANCHEITE POUR REBORDS DE JOINTURE ENTRE TOLES SUR UN VEHICULE

(30) Priority: 04.12.2001 JP 2001370378
(43) Date of publication of application: 01.09.2004
(73) Proprietor: 3M Innovative Properties Company, St. Paul, MN 55133-3427 (US)
(72) Inventor: MINO, Yasuhiro, Sagamihara-city, Kanagawa 229-0032 (JP)
(74) Representative: Meyers, Hans-Wilhelm
(86) International application number: PCT/US2002/037919
(87) International publication number: WO 2003/047855

(56) References cited:
- US-A- 4 894 289
- US-A- 5 807 639

## Description

### Field of the Invention

The present invention relates to a flange section seal material for sealing of a superimposed flange section of metal panels for vehicles.

### Background of the Invention

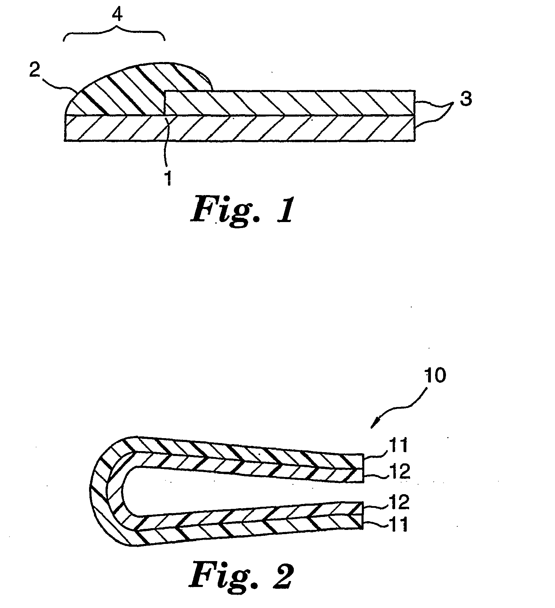

Metal panel joints, i.e. flange sections, formed by superimposing metal panels (steel sheets) for vehicles, are sealed by sealing materials which provide a satisfactory outer appearance while preventing rust due to moisture and the like that can penetrate into the flange section. Sealing of flange sections has commonly been accomplished in the past by applying a paste-like sealer and then heating it for curing. Here, as shown in Fig. 1, a paste section 4 is formed by an extension of one of the metal panels 3 in order to prevent dripping of the sealer 2 from the flange section 1, and the sealer 2 is applied onto this paste section 4. In this method, however, the formation of the paste section requires extra metal panel and thus impedes weight reduction of the vehicle. In addition, a design is necessary such that the panel forming the paste section is positioned on the underside, while adequate sealing can only be accomplished by a design in which a wide paste section is formed to ensure a sufficient seal material adhesion area. Handling of conventionally used paste-like sealers has also required skill to achieve a consistent coating amount and coating width and a uniform outer appearance after coating, while considerable time has also been necessary for coating. Moreover, the paste section is rarely horizontal, as most areas are either sloping or vertical. For this reason it has been necessary to adjust the viscosity of the paste to be high enough to allow it to support its own weight. Most of such paste-like seal materials are composed mainly of vinyl chloride sols, which have posed an environmental problem in recent years.

Techniques have also been developed for improving the problems of such paste-like seal materials. For example, Japanese Unexamined Patent Publication SHO No. 62-48787 discloses a hot-melt thermosetting seal material obtained by mixing a polybutadiene-modified epoxy resin, a styrene-based block copolymer or the like and shaping the mixture into a sheet. Even when such a sheet material is used, however, heating causes its fluidization before thermosetting, whereby it can no longer support its own weight, and this results in fluid dripping which either prevents an adequate seal or impairs the outer appearance.

Japanese Unexamined Patent Publication HEI No. 3-35076 discloses a seal material wherein a pressure-sensitive adhesive layer is provided on at least one side of a material containing a thermoplastic resin and a thermosetting agent. However, since these materials are attached by an adhesive layer, care must be taken to avoid inclusion of air bubbles during attachment, and reattachment after a first attachment is difficult. Furthermore, since a release liner is required to protect the adhesive layer, the release liner becomes a waste product during the operation.

Japanese Unexamined Patent Publication SHO No. 64-16479 discloses a seal material obtained by molding a material composed mainly of a synthetic resin material into the desired shape and fitting and welding the molded article onto the joint section. However, because the seal material disclosed in this publication is a thermoplastic material, it softens and becomes fluidized whenever heat is applied, such that melt flow occurs during the heating cycle in the application step and results in cracks or wrinkles in the coated film.

Japanese Unexamined Patent Publication HEI No. 4-192280 discloses a sealing method wherein metal panels are spot welded together through a foaming sealer, and a paste-like sealer is applied at the edges of both panels. The steps of this method, however, have been time consuming because of the need to adhere the foaming spot sealer before attachment of the panels and then apply the sealer to the edges after spot welding.

US-A-5 807 639 discloses a seal material comprising one layer comprising an elastomer vulcarized with sulfur or organic peroxides, the other layer being a strength member, typically of polyropylene or polyamide.

### Summary of the Invention

One object of the present invention can be to provide a flange section seal material that allows satisfactory and easy sealing of flange sections in vehicles.

In one aspect of the present invention, a flange section seal material is provided that comprises at least two layers for sealing of the flange section of metal panels in a vehicle, the flange section seal material being characterized by having an inner layer containing a hot-melt/fluidizable thermosetting resin with a curing temperature of 80-200°C, and an outer layer which exhibits no significant fluidizing shape change at 80-200°C.

With this type of seal material, the thermosetting resin in the inner layer which is hot-melted and fluidizes during heating maintains its form as a result of the outer layer, and therefore a satisfactory seal can be accomplished without impairment of the seal performance or outer appearance due to fluid dripping.

### Brief Description of the Drawings

Fig. 1 shows the cross-section of a flange section that has been sealed with a conventional paste-like sealer.
Fig. 2 shows the cross-section of an embodiment of a seal material according to the invention.
Fig. 3 shows the cross-section of a seal material composed of a single layer for comparison.
Figs. 4(a) and (b) show the cross-section of different flange sections, each formed by metal panels (cationic electrodeposition coated sheets).
Figs. 5(a) and (b) are schematic drawings showing the directions of the metal panels for the shape retention test.

### Detailed Description of the Invention

The flange section seal material of the invention can have an inner layer containing a hot-melt/fluidizable thermosetting resin with a curing temperature of 80-200°C. The inner layer has a hof-melt/fluidizable thermosetting composition which contains such a thermosetting resin. The hot-melt/fluidizable thermosetting composition usually includes an epoxy-containing material and a curing agent for the epoxy-containing material, and can be fluidized by heating. The epoxy-containing material includes an epoxidized thermoplastic resin, and preferably a low-hygroscopic epoxidized thermoplastic resin. That is because when a low-hygroscopic resin is used, it prohibits the seal material from swelling due to moisture foaming during the thermosetting which interferes the seal of the flange section.

The epoxy-containing material in the thermosetting composition of the inner layer preferably contains a low-hygroscopic epoxidized thermoplastic resin, as mentioned above. Here, "low-hygroscopic" means that the epoxidized thermoplastic resin has a saturation water absorption of no greater than 0.2 wt% at 35°C, 80% RH. Such an epoxidized thermoplastic resin will usually have a solubility parameter (SP) of about 9 or below. Throughout the present specification, the solubility parameter is defined according to the Small formula (P.A. Small, J. Appl. Chem., 3, 71(1953)). An epoxidized thermoplastic resin is a thermoplastic resin with epoxy groups. A thermoplastic resin will generally provide the thermosetting composition with a consistent shape. The epoxidized thermoplastic resin also contributes to the thermosetting reaction due to the presence of the epoxy groups. The cured thermosetting composition will thus be provided with heat resistance or durability.

The epoxidized thermoplastic resin usually has a molecular weight of 1000-10,000 in consideration of the fluidity during the shaping step and during hot melting. The epoxidized thermoplastic resin also usually has 200-15,000 epoxy equivalents in consideration of the heat resistance, durability and water absorption.

A typical example of the aforementioned epoxidized thermoplastic resin is an epoxidized ethylene-based thermoplastic resin. This resin exhibits low hygroscopicity due to the presence of the ethylenic portion. Ethylene-glycidyl (meth)acrylate copolymer is preferred as an epoxidized ethylene-based thermoplastic resin. Ethylene-glycidyl (meth)acrylate copolymer is epoxidized polyethylene, which is disclosed as a component of adhesives and hot-melt compositions in Japanese Unexamined Patent Publication HEI No. 9-137028, Japanese Unexamined Patent Publication HEI No. 10-316955 and elsewhere, and it is usually obtained by copolymerization of ethylene and glycidyl methacrylate. Ethylene-glycidyl (meth)acrylate copolymer therefore comprises an ethylene portion and a glycidyl (meth)acrylate portion. The ethylene portion thereof contributes to low hygroscopicity of the thermosetting composition, while the glycidyl (meth)acrylate portion contributes to adhesion with cationic electrodeposition-coated automobile steel sheets (metal panels) and the outer layers of flange section seal materials.

The ethylene-glycidyl (meth)acrylate copolymer preferably comprises ethylene and glycidyl (meth)acrylate in a monomer weight ratio in the range of 50:50-99:1. With an ethylene-glycidyl (meth)acrylate copolymer containing ethylene above this range, it is difficult to yield a cured product exhibiting the desired mechanical strength and durability. Conversely, if the ethylene-glycidyl (meth)acrylate copolymer contains ethylene below this range, it may not be possible to obtain the desired low hygroscopicity.

A typical ethylene-glycidyl (meth)acrylate copolymer melts easily at a relatively low temperature of about 80°C or below, and when a thermosetting composition containing it is heated to fluidity to accomplish sealing, high fluidity is obtained and the uniformity and smoothness are also high as a result. Also, since kneading can be carried out at relatively low temperature during the heating and mixing process during manufacture of the inner layer material, the risk of reaction between the thermosetting components and the curing agent during the kneading is reduced, and a curing agent of higher reactivity can therefore be selected.

So long as the effect of the invention is not impaired, the epoxidized thermoplastic resin may even be an ethylene-glycidyl (meth)acrylate terpolymer obtained by copolymerization or graft polymerization of a third component with ethylene and glycidyl (meth)acrylate. Examples of such terpolymers include those obtained by copolymerization with alkyl (meth)acrylates, vinyl acetate and the like, while graft polymers include those obtained by grafting polystyrene, polyalkyl (meth)acrylate, acrylonitrile-styrene copolymer and the like.

Another typical example of an epoxidized thermoplastic resin is an epoxidized styrene-based thermoplastic resin, which exhibits low hygroscopicity due to the presence of a conjugated diene. An epoxidized styrene-based thermoplastic resin is a block copolymer comprising, for example, a hard segment composed of polystyrene and a soft segment composed of epoxidized polybutadiene which confers rubber elasticity to the elastomer. Alternatively, an epoxidized polyisoprene may be used instead of an epoxidized polybutadiene, or together with an epoxidized polybutadiene.

The glass transition temperature (Tg) of an epoxidized styrene-based thermoplastic resin is usually very low from -70 to -50°C, and this allows reinforcement of the durability (particularly the vibration tolerance) of the cured thermosetting composition at temperatures as low as about -30°C.

Examples of such epoxidized styrene-based thermoplastic resins include styrene-epoxidized butadiene-styrene copolymer and styrene-epoxidized isoprene-styrene copolymer. In either case, the epoxidation is accomplished by epoxidation of the unsaturated bond of the conjugated diene.

Epoxidized thermoplastic resins as described above are preferably present at 10-90 wt% in the thermosetting composition. At less than about 10 wt% the heat resistance is reduced, and at greater than about 90 wt% the amount of filler that may be added, as described below, is relatively lower such that a low linear expansion coefficient cannot be achieved.

The epoxy-containing material may contain a liquid or solid epoxy resin such as a bisphenol A-type epoxy resin, bisphenol F-type epoxy resin, novolac-type epoxy resin or glycidylamine-type epoxy resin in addition to the aforementioned epoxidized thermoplastic resin, as these can give the thermosetting composition further reinforced heat resistance, durability and adhesion with electrodeposition coated steel sheets. Preferred epoxy resins are relatively low polar epoxy resins such as, for example, hydrogenated bisphenol A-type epoxy resins, alicyclic epoxy resins, linear aliphatic epoxy resins such as butadiene skeleton epoxy resins, and glycidyl ester-type epoxy resins such as dimer acid-modified epoxy resins. This is because such epoxy resins have excellent compatibility with the low-hygroscopic components, for example, the ethylene portion and butadiene portion, in the aforementioned epoxidized thermoplastic resins. It also can prevent absorption of water into the cured composition and is advantageous during heating for the steps of automobile painting, etc. The amount of epoxy resin will usually be 0-500 parts by weight, and preferably 5-400 parts by weight, with respect to 100 parts by weight of component (1), i.e. the low-hygroscopic epoxidized thermoplastic resin.

If necessary, the epoxy-containing material may also contain a compatibilizer. More specifically, a compatibilizer may be included at usually 0-300 parts by weight and preferably 1-100 parts by weight with respect to 100 parts by weight of the epoxidized thermoplastic resin, in order to increase the miscibility between the epoxidized thermoplastic resin and the epoxy resin. There are no particular limitations on a compatibilizer used for the invention so long as it allows miscibility, but it preferably contains polyester resin or an ethylene-vinyl acetate (EVA) copolymer. That is because polyester resin, in particular, when mixed at a certain proportion with the epoxidized thermoplastic resin, not only prevents separation between the epoxidized thermoplastic resin and the epoxy resin, but can also vastly improve the fluidity at the curing temperature of the thermosetting composition (80-200°C).

The curing agent cures the epoxy groups in the epoxy-containing material to form a crosslinked structure in the thermosetting composition, to allow a cured product to be obtained.

According to the invention, there are no restrictions on the curing agent so long as it can give a cured product. The curing agent may therefore include, for example, amine compounds such as dicyandiamide, acryl compounds and rosins with carboxyl groups in the molecule (including acid anhydrides), imidazole derivatives, BF₃ complexes, organic acid hydrazides, diaminomaleonitriles and melamines, as well as mixtures thereof. The degree of polarity of the curing agent is not important. However, for curing of the glycidyl groups of an ethylene-glycidyl (meth)acrylate copolymer, it is necessary to use a curing agent containing an acryl compound or a rosin with a carboxyl group in the molecule, as disclosed in Japanese Unexamined Patent Publication HEI No. 9-137028 and Japanese Unexamined Patent Publication HEI No. 10-316955. Compared to highly polar curing agents which are incompatible with ethylene-glycidyl (meth)acrylate copolymers and substantially cannot react therewith, such a curing agent is more easily miscible with ethylene-glycidyl (meth)acrylate copolymers and more readily cures the glycidyl groups of ethylene-glycidyl (meth)acrylate copolymers.

The curing agent may be used in combination with a curing accelerator. In particular, a curing accelerator containing a phenol, imidazole derivative or tertiary amine can be advantageously used for reaction between a carboxyl-containing curing agent and the epoxy.

The thermosetting composition preferably further includes a filler containing, for example, calcium carbonate, silica or a mixture thereof. A filler can lower the linear expansion coefficient of the cured product. As a result, the cured product will have a lower linear expansion coefficient and reduced shrinkage at low temperature, and less stress will be exerted on coatings formed by application of automobile paints onto the seal material, especially with temperature changes at low temperature. Such formed coatings will therefore be resistant to cracking even at low temperature.

When such a filler is added, the thermosetting composition will often exhibit an undesirable flow property during hot melting. The thermosetting composition of the invention may therefore also contain a plasticizer. Including a plasticizer will ensure that the thermosetting composition maintains the desired fluidity. This is because plasticizers generally have low viscosity and can help to improve the fluidity of the composition.

Plasticizers that may be added to the thermosetting composition include plasticizers containing, for example, phthalic acid esters such as di-2-ethylhexyl phthalate or diisononyl phthalate, adipic acid esters, epoxidized fatty acid esters, epoxidized soybean oil, epoxidized linseed oil, liquid terpene resins, liquid terpene-phenol copolymers, liquid terpene-styrene copolymers, azelaic acid esters, sebacic acid esters, epoxy hexaphthalic acid esters and mixtures thereof. Such plasticizers can provide flexibility to the cured thermosetting composition. They can also lower the glass transition temperature of the cured product and lower the elastic modulus even at low temperatures of -20 to -40°C. As a result, the cured product will be capable of considerable stretching at such low temperatures, and improvement may be achieved in the dynamic durability, such as the vibration tolerance.

### Outer layer

The seal material of the invention has an outer layer that exhibits no significant fluidizing shape change at 80-200°C. The material composing the outer layer is not particularly restricted so long as it can support its shape in this temperature range. As such materials there may be mentioned thermoplastic resins that exhibit no molten fluidity at the above specified temperature range, such as general use engineering plastics such as polyamide resin, polyacetal, polybutylene terephthalate and modified polyphenylene oxide, special use engineering plastic synthetic resins such as polyimides, polyetherimides and polyethersulfones, and thermoplastic elastomers, for example, polystyrene-based, polyurethane-based and polyolefin-based thermoplastic elastomers, materials that they retain their shape at the above specified temperature, such as metals and vulcanized synthetic rubbers, which are typically butadiene rubber, isoprene rubber, styrene-butadiene rubber or ethylene-propylene rubber, as well as thermosetting resin such as phenol resins, melamine resins, epoxy resins, urethane resins, unsaturated polyester resins which is inhibited from fluidization upon heating to the above specified temperature range, and the like.

A resin which melt-fluidizes at the above specified temperature range such as polyethylene, polypropylene, polystyrene, ethylene-vinyl acetate copolymer, ethylene-glycidyl methacrylate copolymer, ethylene-acrylate copolymer, ethylene-ethyl acrylate copolymer and ethylene-acrylic acid copolymer can retain its shape, if its surface is crosslinked by electron beam irradiation to the extent that it has a storage elastic modulus of 5.0 x 10⁵ Pa or more at the above specified temperature range, and such treated resin can be used as an outer layer. In this case, irradiation dosage of 10 Mrad or more with an accelerating voltage of 200 KeV or more is preferred.

As materials for the outer layer there are preferred materials which have sufficient adhesion with adjacent layers such as the inner layer, while also exhibiting adhesion with automobile paints (for example, organic solvent-based acryl paints or organic solvent-based alkyd paints) that are ordinarily applied over the outer layer. Furthermore, since the edge of the flange section will sometimes have a curved shape, the material preferably has flexibility allowing it to follow such curved shapes. From this standpoint, the material for the outer layer is preferably one similar to the material for the inner layer but with low fluidity during heating. Specifically, such materials include resins preferably with a storage elastic modulus of 5.0 x 10⁵ Pa or greater at 80-200°C. If the storage elastic modulus is within this range, no significant fluidity will be exhibited during heating. In order to achieve adequate flexibility, the storage elastic modulus at room temperature is preferably 1.0 x 10⁶ - 1.0 x 10⁸ Pa.

When a thermosetting composition containing such a thermosetting resin is used as the outer layer, it may contain the same type of curing agent, curing accelerator and filler as the thermosetting composition of the inner layer. The outer layer may also be crosslinked by EB irradiation treatment for increased shape retention.

Another layer may also be included between the inner layer and outer layer of the seal material of the invention. Such an additional layer provided between the inner layer and outer layer may be a layer comprising a foaming agent (for example, a chemical foaming agent that releases nitrogen gas or carbon dioxide upon heating, such as an azo compound, sulfonic acid hydrazide compound, nitroso compound or the like, or thermal expanding microcapsules containing a low boiling point hydrocarbon). Expansion of this layer can fill large gaps created by volume changes. One or more barrier layers composed of a nonwoven fabric, a resin such as polyethylene terephthalate (PET) or polyethylene naphthalate (PEN) or a metal may also be provided. Even if air bubbles infiltrate during the sealing, such a barrier layer will prevent the air bubbles from appearing on the surface.

When the material for the outer layer can be afforded adequate fluidity by shear force by the screw of a screw extrusion molding machine such as single or twin screw extruder which is widely used for molding of plastic materials, the seal material of the invention may be produced using such an extrusion molding machine, by shearing and melting the thermosetting composition for the inner layer and the material for the outer layer, and then coextruding them into the desired shape. In cases where the material of the outer layer does not exhibit adequate plasticity and flow properties even by shearing with such a screw extruder, the production may involve application of a melt of the material for the inner layer onto the outer layer which has been molded into the desired shape. Further, apart from a profile extrusion process, a seal material can be molded in a desired shape by extruding each layer as a sheet and pressing the layers in a press machine.

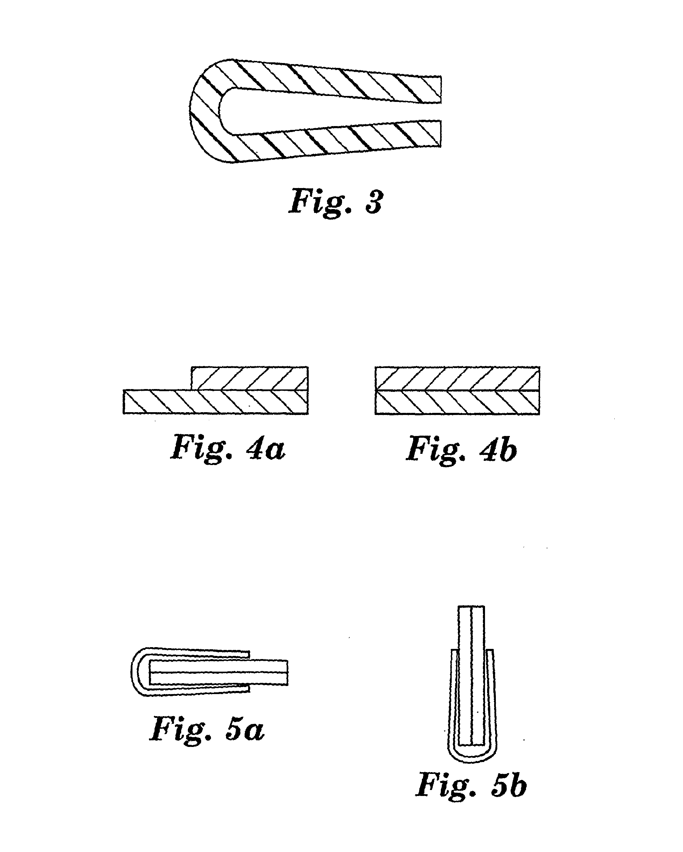

Fig. 2 shows the cross-section of an embodiment of a seal material of the invention. The seal material 10 comprises an outer layer 11 which exhibits no significant fluidizing shape change upon heating, and an inner layer 12 containing a hot-melt/fluidizable thermosetting resin with a curing temperature of 80-200°C. This seal material has a U-shaped cross-sectional shape allowing it to sandwich a flange section. By fitting the seal material onto a flange section and heating at a temperature of 80-200°C, the hot-melt/fluidizable thermosetting resin of the inner layer is fluidized and then cured to form a seal. Here, since the outer layer exhibits no significant shape change, fluid dripping can be prevented when the resin of the inner layer is fluidized. This sealing step may be carried out during the baking step (at a heating temperature of, for example, 80-200°C) for intercoating or overcoating, which is carried out subsequently in an automobile painting line.

### Examples

### Example 1

The following composition:
(i) 60 parts by weight of ethylene-glycidyl methacrylate copolymer containing 18 wt% glycidyl methacrylate (CG5001, trade name of Sumitomo Chemical Industries),
(ii) 6 parts by weight of a carboxyl group-containing rosin with an acid value of 240 mgKOH/g (curing agent, KE604, trade name of Arakawa Chemical Co.),
(iii) 1.5 parts by weight of an imidazole derivative (curing accelerator, 2MOAK, trade name of Shikoku Chemical Corp.),
(iv) 3 parts by weight of calcium carbonate (filler, WHITEON SB, trade name of Shiraishi Calcium Co., Ltd.),
as the inner layer, and the following composition:
(i) 48 parts by weight of ethylene-glycidyl methacrylate copolymer containing 12 wt% glycidyl methacrylate (BONDFAST E, trade name of Sumitomo Chemical Industries),
(ii) 12 parts by weight of ethylene-glycidyl methacrylate copolymer containing 18 wt% glycidyl methacrylate (CG5001, trade name of Sumitomo Chemical Industries),
(iii) 6 parts by weight of a carboxyl group-containing rosin with an acid value of 240 mgKOH/g (curing agent, KE604, trade name of Arakawa Chemical Co.),
(iv) 1.5 parts by weight of an imidazole derivative (curing accelerator, 2MOAK, trade name of Shikoku Chemical Corp.),
(v) 3 parts by weight of calcium carbonate (filler, WHITEON SB, trade name of Shiraishi Calcium Co., Ltd.),
as the outer layer were kneaded with a twin-screw extruder (TSE) and subjected to shaping coextrusion to obtain a laminated body with the cross-sectional shape shown in Fig. 2. The outer layer of the laminated body was exposed to electron beam (EB) treatment (250 KeV, 30 Mrad) for crosslinking, to obtain a seal material according to the invention.

### Comparative Example 1

The following composition:
(i) 60 parts by weight of ethylene-glycidyl methacrylate copolymer containing 18 wt% glycidyl methacrylate (CG5001, trade name of Sumitomo Chemical Industries),
(ii) 6 parts by weight of a carboxyl group-containing rosin with an acid value of 240 mgKOH/g (curing agent, KE604, trade name of Arakawa Chemical Co.),
(iii) 1.5 parts by weight of an imidazole derivative (curing accelerator, 2MOAK, trade name of Shikoku Chemical Corp.),
(iv) 3 parts by weight of calcium carbonate (filler, WHITEON SB, trade name of Shiraishi Calcium Co., Ltd.),
was kneaded with a twin-screw extruder (TSE) and subjected to shaping extrusion to obtain a single-layer seal material as shown in Fig. 3.

### Comparative Example 2

The following composition:
(i) 48 parts by weight of ethylene-glycidyl methacrylate copolymer containing 12 wt% glycidyl methacrylate (BONDFAST E, trade name of Sumitomo Chemical Industries),
(ii) 12 parts by weight of ethylene-glycidyl methacrylate copolymer containing 18 wt% glycidyl methacrylate (CG5001, trade name of Sumitomo Chemical Industries),
(iii) 6 parts by weight of a carboxyl group-containing rosin with an acid value of 240 mgKOH/g (curing agent, KE604, trade name of Arakawa Chemical Co.),
(iv) 1.5 parts by weight of an imidazole derivative (curing accelerator, 2MOAK, trade name of Shikoku Chemical Corp.),
(v) 3 parts by weight of calcium carbonate (filler, WHITEON SB, trade name of Shiraishi Calcium Co., Ltd.),
was kneaded with a twin-screw extruder (TSE) and subjected to shaping extrusion to obtain a single-layer seal material precursor as shown in Fig. 3. The outer layer of the seal material precursor was exposed to electron beam (EB) treatment (250 KeV, 30 Mrad) for crosslinking, to obtain a seal material as a comparative example.

### Comparative Example 3

A paste-like PVC (polyvinyl chloride) sealer (SUNDINE 1361-5, trade name of Asahi Corporation) was used as a sample. In the evaluation test described below, it was coated onto metal panels superimposed in the manner shown in Fig. 4(a) to a thickness of about 2 mm using a brush and spatula without including air, and smoothed for the test (see Fig. 1).

### Comparative Example 4

After hot kneading of 100 parts by weight of calcium carbonate (WHITEON SB, trade name of Shiraishi Calcium Co., Ltd.), 20 parts by weight of an tackifier (PICCOLITE A135, trade name of Hercules Co.) and 15 parts by weight of a polyester-based plasticizer (POLYCIZER W230-S, trade name of DaiNippon Ink Co.) to 100 parts by weight of ethylene-vinyl acetate copolymer resin (H2031, trade name of Sumitomo Chemical Co.) using a twin-screw extruder (TSE), a U-shaped nozzle was fitted on the tip of the extruder along the shape of the panel joint, and extrusion was followed by cooling for molding into the shape shown in Fig. 3.

### Comparative Example 5

After mixing 75 parts by weight of n-butyl acrylate, 25 parts by weight of N,N-dimethylacrylamide and 0.04 part by weight of IRGACURE-651 (photopolymerization initiator, product of Ciba Specialty Co.), the mixture was purged with nitrogen and exposed to ultraviolet rays for partial polymerization to a viscosity of about 3000 mPa·s. This was continuously stirred while mixing in 0.1 part by weight of IRGACURE-651, 3 parts by weight of glycidyl methacrylate, 50 parts by weight of a bisphenol A-type epoxy with approximately 500 epoxy equivalents (EPIKOTE 1001, trade name of Yuka Shell Epoxy Co.), 30 parts by weight of a bisphenol A-type epoxy with approximately 190 epoxy equivalents (EPON 828, trade name of Yuka Shell Co.), 6 parts by weight of dicyandiamide, 2 parts by weight of 2,4-diamino-6-(2'-methylimidazolyl(1'))-ethyl-S-triazine (2-MZA), 4 parts by weight of fumed silica (R972, trade name of Nihon Aerosil Co.) as a filler, 4 parts by weight of glass bubbles (C15-250, trade name of 3M Co.) and 0.2 part by weight of 3-mercaptopropionic acid as a chain transfer agent, and the mixture was degassed, sandwiched between two silicone-treated PET films with a thickness of 50 µm and sheeted to a thickness of 1.0 mm, and then exposed to ultraviolet rays onto the upper and lower surfaces at an intensity of 1.76 mW/cm² to a total of 1000 mJ/cm² for photopolymerization, to obtain a sheet with suitable pressure-sensitive adhesion.

The samples obtained in the above-mentioned examples and comparative examples were evaluated by the following method.

### Evaluation method

### 1. Storage elastic modulus

The sample was cut to a size of 6 mm x 35 mm, and the elastic modulus was measured with a dynamic viscoelasticity measuring apparatus (RSAII, trade name of Rheometrics Co.).

### 2. Handleability for fitting onto panels

The ease of handleability was evaluated for fitting to cover the edges of cationic electrodeposition coated sheets superimposed as shown in Figs. 4(a) and (b) ((a): Comparative Example 3, (b): others).
A: Fitting accomplished in short time without requiring jig
B: Jig required, some time necessary
C: Jig required, time and skill necessary

### 3. Absorption of gap (seal property)

Two 25 mm x 150 mm x 0.8 mm cold-rolled steel sheets coated with a cationic electrodeposition coating (E-COATING U-600 BLACK by Nihon Paint Co.) were attached together with very thin double-sided tape. The sample was fitted or coated along the joint, maintained at 120°C for 10 minutes, and after which it was allowed to stand for 30 minutes in a thermostatic oven at 140°C, to simulate a situation in which the flange section to be sealed is subjected to an ordinary coating step. The sample was then taken out of the oven and the gap seal property of the steel sheets was visually observed.
A: Complete sealing of gap
B: unfilled portion found in gap

### 4. Coating outer appearance

The sample was fitted or coated with a brush and spatula onto cationic electrodeposition coated sheets superimposed as shown in Figs. 4(a) and (b) ((a): Comparative Example 3, (b): others).

The sample was then allowed to stand for 10 minutes in an oven preheated to 120°C. It was then coated with a paint used for automobile body painting (i.e., an aminoalkyd paint obtained by crosslinking polyester with melamine) by bell-type spraying and allowed to dry at room temperature for about 5 minutes, after which it was allowed to stand for 30 minutes in an oven at 140°C. After removing it from the oven and allowing it to stand at room temperature for about 5 minutes, it was coated with a paint used for automobile body painting (i.e., an aminoalkyd-type solid paint obtained by crosslinking polyester with melamine) by bell-type spraying and allowed to dry at room temperature for about 5 minutes, after which it was allowed to stand for 30 minutes in an oven at 140°C. The dry thickness of each coating was approximately 40 µm for both the intercoating and overcoating. The surface appearance of each of the painted samples was evaluated visually.
A: Satisfactory
B: Surface satisfactory, but seal line not even
C: Notable wrinkles and paint film cracking occurred

### Shape retention after heat treatment (horizontal and vertical directions)

The sample was fitted or coated with a brush and spatula onto cationic electrodeposition coated sheets superimposed as shown in Figs. 4(a) and (b) ((a): Comparative Example 3, (b): others).

The fitted or coated sample was then placed (a) in the horizontal direction and (b) in the vertical direction (with the seal hanging downward) as shown in Figs. 5(a) and (b) (only Example 1 is shown for illustration), and allowed to stand for 15 minutes in an oven preheated to 120°C.

The sample was then removed from the oven and it was visually determined whether or not it retained its original shape.
A: Satisfactory
B: Deformation or dripping under its own weight
C: Dropping

The results of these evaluation tests are summarized in the following table.

**Evaluation Results**

| | Example 1 | Comp.Ex.1 | Comp.Ex.2 | Comp.Ex.3 | Comp.Ex.4 | Comp.Ex.5 |
|---|---|---|---|---|---|---|
| Elastic modulus (100°C) | 6.50 x 10⁵ | N/A | 6.50 x 10⁵ | N/A | N/A | N/A |
| Handleability for fitting onto panels | A | A | A | C | A | B |
| Seal property | A | A | B | A | A | A |
| Coating outer appearance | A | A | A | A | C | A |
| Shape retention | A | C | A | B | C | A |

| | | | | | | |
|---|---|---|---|---|---|---|
| N/A: Unmeasurable | | | | | | |

Example 1 had satisfactory handleability for fitting, while the side contacting the adherend (metal panel) had increased fluidity by heating, and therefore exhibited an excellent seal property. The outer layer exhibited no significant fluidity upon heating and therefore the shape retention was satisfactory, while the coating adhesion was also excellent and the resin composing the seal material, which was thermosetting, also had excellent heat resistance.

Comparative Example 1, which was a single-layer seal material composed of a resin for the inner layer of a seal material according to the invention, had an insufficient storage elastic modulus at high temperature, deformed under its own weight, and exhibited inferior shape retention.

Comparative Example 2 was a single-layer seal material composed of a resin for the outer layer of a seal material according to the invention which was crosslinked with an electron beam. The shape retention was satisfactory, but because of its own low fluidity, the seal property was notably inferior.

Comparative Example 3 was a common PVC (polyvinyl chloride) sealer. Because it is liquid, coating of the prescribed amount was difficult and operator skill was required. It deformed under its own weight, and exhibited insufficient shape retention.

Comparative Example 4 was a thermoplastic resin with high fluidity, and therefore the seal property was satisfactory, but the thermoplastic property resulted in wrinkles upon repeated heating carried out in the coating step, and the shape could not be retained.

Comparative Example 5 was a pressure-sensitive adhesive-treated sheet-like melt seal tape. Because it was pressure-sensitive adhesive-treated, the shape retention, coating outer appearance and seal property were satisfactory when it was fitted onto the adherend (panel). However, since the sheet had to be matched with the prescribed shape and it was pressure-sensitive adhesive, reattachment during application was difficult and therefore its handleability for fitting was poor.

The seal material of the invention has satisfactory handleability for fitting, an excellent seal property and satisfactory shape retention.

## Claims

1. A flange section seal material comprising at least two layers for sealing of a flange section of panels in a vehicle, the flange section seal material being **characterized by** having an inner layer containing a hot-melt/fluidizable thermosetting resin with a curing temperature of 80-200°C, and an outer layer which exhibits no significant fluidizing shape change at 80-200°C,
wherein said hot-melt/fluidizable thermosetting resin can be fluidized and then cured to form a seal.

2. A flange section seal material according to claim 1, wherein said outer layer contains a resin with a storage elastic modulus of 5.0 x 10⁵ Pa or greater at 80-200°C.

3. A flange section seal material according to claim 1 or 2, wherein said hot-melt/fluidizable thermosetting resin contains an epoxidized thermoplastic resin.

4. A flange section comprising a seal material according to any one of claims 1 to 3, wherein said hot-melt/fluidizable thermosetting resin has been fluidized and cured so as to form a seat on said flange section.

5. A flange section according to claim 4, wherein said flange section forms part of a vehicle.

## Patentansprüche

1. Flanschprofil-Dichtungsmaterial, das mindestens zwei Schichten aufweist für das Abdichten eines Flanschprofils von Blechen in einem Fahrzeug, wobei das Flanschprofil-Dichtungsmaterial **dadurch gekennzeichnet ist, dass** es eine innere Schicht, die ein heißschmelzendes/fließendes wärmehärtendes Harz mit einer Aushärttemperatur von 80 - 200°C enthält, und eine äußere Schicht aufweist, welche keine wesentliche Fließ-Formveränderung bei 80 - 200 °C zeigt,
wobei das heißschmelzende/fließende wärmehärtende Harz verflüssigt werden und dann ausgehärtet werden kann, um eine Dichtung auszubilden.

2. Flanschprofil-Dichtungsmaterial nach Anspruch 1, wobei die äußere Schicht ein Harz mit einem Speicherelastizitätsmodul von 5,0 x 10⁵ Pa oder darüber bei 80 - 200 °C enthält.

3. Flanschprofil-Dichtungsmaterial nach Anspruch 1 oder 2, wobei das heißschmelzende/fließende Harz ein epoxidiertes thermoplastisches Harz enthält.

4. Flanschprofil, das ein Dichtungsmaterial nach einem der Ansprüche 1 bis 3 aufweist, wobei das heißschmelzende/fließende wärmehärtende Harz verflüssigt und ausgehärtet worden ist, um so eine Dichtung auf dem Flanschprofil auszubilden.

5. Flanschprofil nach Anspruch 4, wobei das Flanschprofil einen Teil eines Fahrzeuges bildet.

## Revendications

1. Matériau d'étanchéité pour rebords de jointure entre tôles, comprenant au moins deux couches pour l'étanchement d'un rebord de jointure entre tôles sur un véhicule, le matériau d'étanchéité pour rebords de jointure entre tôles étant **caractérisé en ce qu'**il comporte une couche interne contenant une résine thermodurcissable thermofusible/capable d'être fluidifiée ayant une température de durcissement de 80-200 °C, et une couche externe qui ne présente pas de changement significatif de forme par fluidification à 80-200 °C,
dans lequel ladite résine thermodurcissable thermofusible/capable d'être fluidifiée peut être fluidifiée puis durcie pour former un joint d'étanchéité.

2. Matériau d'étanchéité pour rebords de jointure entre tôles selon la revendication 1, dans lequel ladite couche externe contient une résine ayant un module élastique de conservation de 5,0 x 10⁵ Pa ou plus à 80-200 °C.

3. Matériau d'étanchéité pour rebords de jointure entre tôles selon la revendication 1 ou 2, dans lequel ladite résine thermodurcissable thermofusible/capable d'être fluidifiée contient une résine thermoplastique époxydée.

4. Rebord de jointure entre tôles comprenant un matériau d'étanchéité selon l'une quelconque des revendications 1 à 3, dans lequel ladite résine thermodurcissable thermofusible/capable d'être fluidifiée a été fluidifiée et durcie de façon à former un joint d'étanchéité sur ledit rebord de jointure entre tôles.

5. Rebord de jointure entre tôles selon la revendication 4, dans lequel ledit rebord de jointure entre tôles fait partie d'un véhicule.
